# DEMANDE DE BREVET EUROPEEN

(11) **EP 0 892 572 A1**
(43) Date de publication de la demande: **20.01.1999**
(21) Numéro de dépôt: 98401793.9
(22) Date de dépôt: 16.07.1998
(51) Int. Cl.: H04Q 7/38

(54) **Porteuse BCCH à puissance non constante et procédé correspondant de mesure du niveau de signal recu par une station mobile**

(30) Priorité: 17.07.1997 FR 9709069
(71) Demandeur: ALCATEL ALSTHOM COMPAGNIE GENERALE D'ELECTRICITE, 75008 Paris (FR)
(72) Inventeur: Szalajski, David, 78000 Versailles (FR); Le Strat, Evelyne, 75015 Paris (FR)
(74) Mandataire: El Manouni, Josiane

(57) **Abrégé**

L'invention concerne une porteuse BCCH émise par une station de base d'un système de radiocommunication numérique cellulaire. La porteuse BCCH est segmentée de manière temporelle en trames, elles-mêmes divisées en un nombre déterminé N_{IT} d'intervalles de temps (IT0 à IT8). La porteuse BCCH supporte notamment un canal physique BCCH portant lui-même au moins un canal logique BCCH transmettant une information BCCH (I). Chaque station mobile, pour laquelle la station de base émettant la porteuse BCCH est une station de base voisine, dispose d'au moins une fenêtre d'écoute dans chacune d'au moins N_{T} trame(s) successive(s), N_{T} ≥ 1, soit au moins N_{F} fenêtre(s) d'écoute successive(s) permettant chacune à la station mobile concernée de recevoir au moins N_{E} intervalle(s) de temps de la porteuse BCCH, N_{E} ≥ 1.

Selon l'invention, la porteuse BCCH supporte au moins N_{R} canal(aux) physique(s) BCCH transmis à puissance constante et constitué(s) par la récurrence dans chaque trame de N_{R} intervalle(s) de temps BCCH (IT0, IT3, IT6). Le ou chacun des N_{R} canal(aux) physique(s) BCCH porte au moins le canal logique BCCH, chaque intervalle de temps BCCH contenant l'information BCCH au moins une fois sur N_{T} trame(s) successive(s). Le nombre et l'espacement du ou des N_{R} intervalle(s) de temps BCCH sont tels que l'information BCCH est entièrement reçue dans la ou l'une des au moins N_{F} fenêtre(s) d'écoute successive(s) de chaque station mobile. Les intervalles de temps autres que les intervalles de temps BCCH sont émis avec une puissance pouvant être contrôlée.

## Description

Le domaine de l'invention est celui des systèmes de radiocommunication numériques cellulaires avec des mobiles, tels que ceux conçus selon le standard de radiotélécommunication public GSM.

Par standard GSM, on entend ici aussi bien le standard GSM 900 ("Groupe Spécial systèmes Mobiles publics de radiocommunication fonctionnant dans la bande des 900 MHz") que le standard DCS 1800 ("Digital Cellular System" fonctionnant dans la bande des 1800 MHz).

Plus précisément, l'invention concerne une structure particulière de porteuse BCCH, ainsi qu'un procédé de mesure du niveau de signal reçu par une station mobile sur une telle porteuse BCCH.

D'une façon générale, un système de radiocommunication numérique cellulaire est mis en oeuvre au sein d'un réseau de cellules géographiques parcouru par des stations mobiles. Une station de base est associée à chaque cellule, et une station mobile communique par l'intermédiaire de la station de base associée à la cellule dans laquelle elle se trouve.

Chaque station de base (et donc chaque cellule) utilise un ou plusieurs couples de porteuses radio, dont obligatoirement un couple de porteuses BCCH qui lui est propre. Les porteuses d'un même couple sont utilisées respectivement pour la voie montante (station mobile vers station de base) et pour la voie descendante (station de base vers station mobile).

De façon classique, chaque porteuse est segmentée de manière temporelle en utilisant un schéma fixe de multiplexage à répartition dans le temps (AMRT). Selon ce schéma, l'axe temporel est divisé en trames successives de durée fixe, chacune desdites trames étant elle-même divisée en un nombre déterminé d'intervalles de temps, la récurrence d'un intervalle de temps particulier dans chaque trame constituant un canal physique sur lequel peuvent être multiplexés plusieurs canaux logiques.

La porteuse BCCH de la voie montante (émise par la station mobile) supporte généralement un canal logique de trafic (TCH, pour "Traffic CHannel" en langue anglaise), qui est utilisé pour transmettre les données des usagers ou la parole, ainsi qu'un canal logique d'accès aléatoire (RACH, pour "Random Access CHannel" en langue anglaise), qui est utilisé par une station mobile pour accéder au réseau afin de s'enregistrer dans une cellule ou passer un appel.

La porteuse BCCH de la voie descendante (émise par la station de base) supporte notamment un ou plusieurs canaux logiques de trafic TCH, qui sont multiplexés sur un ou plusieurs canaux physiques, ainsi que les canaux logiques de signalisation suivants, qui sont généralement multiplexés sur un canal physique constitué par la récurrence du premier intervalle de temps de chaque trame :
- un canal logique de diffusion (BCCH, pour "Broadcast Control CHannel" en langue anglaise), qui fournit à toutes les stations mobiles une information générale sur le réseau, la cellule dans laquelle la station mobile se trouve et les cellules adjacentes;
- un canal logique de synchronisation (SCH, pour "Synchronization CHannel" en langue anglaise), qui porte des informations permettant la synchronisation des trames et l'identification du transmetteur de la station de base ;
- un canal logique de correction des fréquences (FCH, pour "Frequency CHannel" en langue anglaise), qui donne des informations sur la porteuse utilisée ;
- un canal logique d'allocation des ressources (AGCH, pour "Access Grant CHannel" en langue anglaise), qui est utilisé pour allouer des ressources dédiées (canal de signalisation SDCCH ou canal de trafic TCH) à la station mobile qui les a demandées via le canal d'accès aléatoire RACH ; et
- un canal logique de messagerie (PCH, pour "Paging CHannel" en langue anglaise), qui est utilisé pour rechercher et avertir une station mobile lors d'un appel en provenance du réseau.

La présente invention concerne précisément la porteuse BCCH de la voie descendante, que l'on appelle plus simplement porteuse BCCH dans la suite de la description.

Il convient maintenant de rappeler que l'un des rôles essentiels des porteuses BCCH est de permettre au système de savoir dans quelle cellule se trouve réellement chaque station mobile, et donc de détecter quand une station mobile passe d'une cellule à une autre. En effet, une station mobile qui se trouve dans une cellule donnée, dite cellule courante, écoute en permanence les porteuses BCCH des cellules voisines, et renvoie les mesures correspondantes au système, de façon que celui-ci détermine si la station mobile n'est pas en train de passer d'une cellule à une autre.

Notamment, en mode de communication active, l'écoute des cellules voisines par la station mobile permet au système de décider quand un transfert intercellulaire (handover) doit avoir lieu, c'est-à-dire quand une cellule voisine doit devenir la nouvelle cellule courante.

De même, en mode veille, l'écoute des cellules voisines par la station mobile permet au système de détecter un éventuel changement de zone de localisation (LAI, pour "Location Area Identity" en langue anglaise).

Classiquement, l'écoute des porteuses BCCH des cellules voisines consiste pour une station mobile à mesurer le niveau de signal (c'est-à-dire la puissance) reçu sur chaque porteuse BCCH. La cellule voisine dont l'identité a pu être décodée et dont la porteuse BCCH peut être reçue avec la puissance maximale est alors choisie comme nouvelle cellule courante.

Actuellement, chaque station de base émet sa porteuse BCCH avec une puissance constante. En effet, il est généralement admis que tous les intervalles de temps de toutes les trames d'une même porteuse BCCH doivent être émis avec une même puissance. En d'autres termes, tous les canaux physiques (portant eux-mêmes des canaux logiques multiplexés, à savoir aussi bien les canaux logiques de signalisation que des canaux logiques de trafic) sont émis avec une puissance maximale.

Or, il s'avère qu'émettre une porteuse BCCH avec une puissance constante présente l'inconvénient majeur d'impliquer un niveau d'interférence élevé sur cette porteuse BCCH. Par conséquent, le facteur de réutilisation des porteuses BCCH dans les cellules est plus faible. En d'autres termes, il est plus difficile de réutiliser une même porteuse BCCH dans d'autres cellules et la bande de fréquences nécessaire pour assurer un trafic donné est donc plus importante, ce qui constitue un inconvénient économique non négligeable.

Par ailleurs, il n'est pas possible d'appliquer à une porteuse BCCH à puissance constante les techniques connues de réduction de l'interférence, telles que le contrôle de puissance ou la transmission discontinue (DTX).

L'invention a notamment pour objectif de pallier ces différents inconvénients de l'état de la technique.

Plus précisément, l'un des objectifs de la présente invention est de fournir une porteuse BCCH pouvant être émise à puissance non constante, de façon notamment à réduire le niveau d'interférence sur cette porteuse BCCH et d'augmenter le facteur de réutilisation des porteuses BCCH dans les différentes cellules.

L'invention a également pour objectif de fournir une stratégie d'écoute adaptée à une telle porteuse BCCH émise à puissance non constante. En d'autres termes, l'invention a également pour objectif de fournir un procédé de mesure du niveau de signal reçu par une station mobile sur une telle porteuse BCCH.

Ces différents objectifs, ainsi que d'autres qui apparaîtront par la suite, sont atteints selon l'invention à l'aide d'une porteuse BCCH émise par une station de base d'un système de radiocommunication numérique cellulaire, à destination d'une pluralité de stations mobiles,
ladite porteuse BCCH étant segmentée de manière temporelle en trames successives de durée fixe, chacune desdites trames étant elle-même divisée en un nombre déterminé N_{IT} d'intervalles de temps, ladite porteuse BCCH supportant notamment un canal physique BCCH portant lui-même au moins un canal logique BCCH, ledit canal logique BCCH transmettant une information générale de signalisation, dite information BCCH,
chaque station mobile, pour laquelle la station de base émettant ladite porteuse BCCH est une station de base voisine, disposant d'au moins une fenêtre d'écoute dans chacune d'au moins N_{T} trame(s) successive(s), N_{T} ≥ 1, soit au moins N_{F} fenêtre(s) d'écoute successive(s) pour la réception notamment de ladite porteuse BCCH, chaque fenêtre d'écoute permettant à la station mobile concernée de recevoir au moins N_{E} intervalle(s) de temps de ladite porteuse BCCH, N_{E} ≥ 1,
caractérisée en ce que la porteuse BCCH supporte au moins N_{R} canal(aux) physique(s) BCCH transmis à puissance constante et constitué(s) par la récurrence dans chaque trame de N_{R} intervalle(s) de temps, dit(s) intervalle(s) de temps BCCH,
en ce que ledit ou chacun desdits N_{R} canal(aux) physique(s) BCCH porte au moins ledit canal logique BCCH, ledit ou chacun desdits N_{R} intervalles de temps BCCH contenant ladite information BCCH (I) au moins une fois sur N_{T} trame(s) successive(s),
en ce que le nombre et l'espacement du ou desdits N_{R} intervalle(s) de temps BCCH sont tels que ladite information BCCH est entièrement reçue dans ladite ou l'une desdites au moins N_{F} fenêtre(s) d'écoute successive(s) de chaque station mobile,
et en ce que les intervalles de temps autres que les N_{R} intervalles de temps BCCH sont émis avec une puissance pouvant être contrôlée.

Ainsi, la porteuse BCCH de l'invention n'est pas émise à puissance constante, ce qui permet de réduire le niveau d'interférence sur cette porteuse BCCH et d'avoir un facteur de réutilisation de cette porteuse BCCH dans les différentes cellules plus élevé.

En effet, le principe général de l'invention consiste à émettre avec une puissance constante uniquement un ou plusieurs intervalles de temps (appelés "intervalles de temps BCCH" dans la suite de la description), la récurrence de chacun de ces intervalles de temps BCCH constituant un canal physique BCCH portant le canal logique BCCH (éventuellement multiplexé avec d'autres canaux logiques de signalisation ou de trafic).

La seule règle à vérifier est que le nombre et l'espacement des intervalles de temps BCCH soient tels qu'au moins l'un de ces intervalles de temps BCCH est entièrement reçu dans l'une des au moins N_{F} fenêtre(s) d'écoute successives de chaque station mobile. En d'autres termes, on s'assure que la station mobile, qui dispose d'au moins N_{F} fenêtre(s) d'écoute successives des cellules voisines (notamment entre l'émission et la réception du canal de trafic), reçoit au moins un des intervalles de temps BCCH de la porteuse BCCH.

Chaque intervalle de temps (et donc chaque canal physique correspondant) possiblement contrôlé en puissance, c'est-à-dire distinct des intervalles de temps BCCH, porte notamment un ou plusieurs canaux logiques de trafic TCH multiplexés, utilisés par des stations mobiles dont la cellule courante est celle associée à la porteuse BCCH considérée ici. Le contrôle de la puissance de chacun de ces canaux physiques a principalement pour but de n'utiliser que la puissance minimale nécessaire au bon écoulement du trafic. On comprendra en effet aisément que cette puissance minimale nécessaire est directement fonction de la position de la station mobile concernée par rapport à la station de base de la cellule courante de cette station mobile. Ainsi, le canal physique qui porte un canal logique de trafic TCH d'une station mobile qui se trouve près de sa station de base courante nécessite une puissance beaucoup plus faible que celui portant un canal logique de trafic TCH d'une station mobile en limite de cellule.

De façon avantageuse, le nombre N_{R} d'intervalle(s) de temps BCCH vérifie la relation suivante : N_{R} = INT [N_{IT} / N_{E}], où INT [X] est l'entier supérieur ou égal à X.

Avantageusement, lorsque N_{R} ≥ 2, lesdits N_{R} intervalles de temps BCCH sont équirépartis au sein de la structure de trame.

Préférentiellement, lorsque N_{T} ≥ 2, ledit ou au moins un desdits N_{R} canal(aux) physique(s) BCCH porte, outre ledit canal logique BCCH, au moins un autre canal logique multiplexé avec le canal logique BCCH sur le canal physique BCCH, ledit au moins un autre canal logique transmettant une autre information dans ledit ou chacun desdits N_{R} intervalles de temps BCCH qui ne contient pas ladite information BCCH.

De cette façon, on ne perd pas la capacité laissée libre sur chaque canal physique BCCH du fait que le canal logique BCCH n'est pas présent dans chaque trame. En effet, certains intervalles de temps BCCH ne contiennent pas l'information BCCH.

De façon préférentielle, ledit au moins un autre canal logique multiplexé avec ledit canal logique BCCH sur le canal physique BCCH appartient au groupe comprenant :
- un canal de trafic (TCH) demi-débit ;
- un canal de contrôle dédié (SDCCH) ;
- un canal de synchronisation (SCH) ;
- un canal de correction des fréquences (FCH) ;
- un canal d'allocation des ressources (AGCH) ;
- un canal de messagerie (PCH).

De façon avantageuse, lorsque N_{T} ≥ 2 et N_{R} ≥ 2, au moins un desdits N_{R} intervalles de temps BCCH contient ladite information BCCH sur chaque trame successive, et le ou les autres desdits NR intervalles de temps BCCH contien(nen)t soit ladite information BCCH soit ladite autre information selon les trames.

Ainsi, le concept de l'invention peut être étendu au cas où l'information BCCH apparaît :
- d'une part, toujours à une même position d'intervalle de temps (il s'agit par exemple, comme c'est le cas dans le standard GSM, de la première position d'intervalle de temps de chaque trame) et à un certain rythme, et
- d'autre part, à différentes positions d'intervalles de temps selon la trame (dans ce cas, c'est comme si en apparence le canal logique BCCH glissait d'une trame à l'autre entre différents intervalles de temps BCCH, c'est-à-dire entre différents canaux physiques BCCH).

L'invention concerne également un procédé de mesure du niveau de signal reçu sur une porteuse BCCH telle que précitée, par une station mobile pour laquelle la station de base émettant ladite porteuse BCCH est une station de base voisine,

ladite station mobile disposant d'au moins une fenêtre d'écoute dans chacune d'au moins N_{T} trame(s) successive(s), N_{T} ≥ 1, soit au moins N_{F} fenêtre(s) d'écoute successive(s) pour la réception notamment de ladite porteuse BCCH, chaque fenêtre d'écoute permettant à ladite station mobile de recevoir au moins N_{E} intervalle(s) de temps de ladite porteuse BCCH, N_{E} ≥ 1,
ledit procédé étant caractérisé en ce qu'il comprend les étapes suivantes :
- division de ladite ou de chacune desdites N_{F} fenêtre(s) d'écoute successive(s) en une pluralité de portions de temps, de façon que, lors de la réception de ladite porteuse BCCH, au moins une desdites portions de temps contienne exclusivement une partie dudit ou de l'un desdits N_{R} intervalle(s) de temps BCCH;
- mesure du niveau de signal reçu sur chacune desdites portions de temps de ladite ou de chacune desdites N_{F} fenêtre(s) d'écoute successive(s) ;
- comparaison des niveaux de signal reçu mesurés, de façon à détecter le niveau de signal reçu maximal qui est considéré comme constituant ledit niveau de signal reçu sur ladite porteuse BCCH.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- chacune des figures 1 à 3 présente une ou plusieurs trames successives d'un mode de réalisation particulier d'une porteuse BCCH selon l'invention, ainsi qu'une ou plusieurs fenêtres d'écoute successives correspondantes dont dispose chaque station mobile pour laquelle cette porteuse BCCH constitue une porteuse BCCH de cellule voisine (à savoir, une fenêtre d'écoute sur une trame pour la figure 1, deux fenêtres d'écoute sur deux trames pour la figure 2 et trois fenêtres d'écoute sur trois trames pour la figure 3) ; et

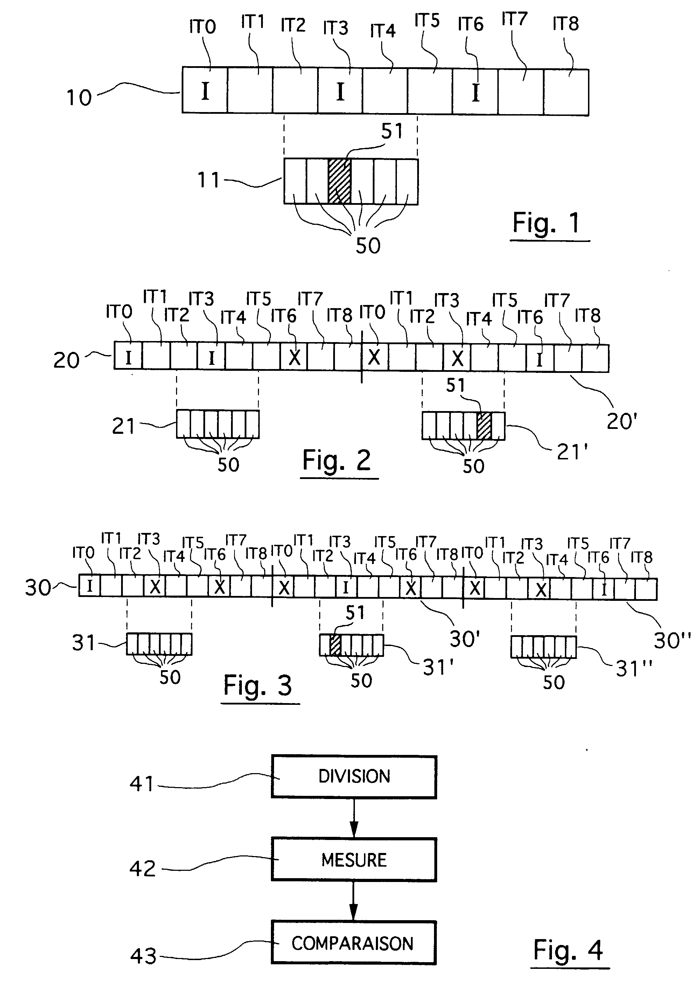

- la figure 4 présente un organigramme simplifié d'un mode de réalisation particulier du procédé selon l'invention de mesure du niveau de signal reçu sur une porteuse BCCH telle que présentée sur les figures 1 à 3.

L'invention concerne donc une structure particulière de porteuse BCCH, ainsi qu'un procédé de mesure du niveau de signal reçu par une station mobile sur une telle porteuse BCCH.

On rappelle qu'une porteuse BCCH est émise par une station de base d'un système de radiocommunication numérique cellulaire. Elle est propre à la cellule géographique associée à cette station de base. Elle supporte autant de canaux physiques qu'il y a d'intervalles de temps dans chaque trame. Elle supporte notamment un canal physique BCCH, portant lui-même un canal logique de contrôle diffusé (BCCH) qui transmet une information générale de signalisation, dite information BCCH.

On rappelle également que les différentes cellules géographiques sont parcourues par des stations mobiles. Pour une station mobile donnée, on appelle "cellule courante" la cellule dans laquelle se trouve cette station mobile, et "cellule voisine" une cellule voisine de la cellule courante. On parle également de "station de base courante" ou de "station de base voisine", selon que la cellule à laquelle est associée cette station de base est elle-même qualifiée de courante ou voisine.

La figure 1 présente une structure de trame 10 d'un premier mode de réalisation particulier d'une porteuse BCCH selon l'invention. De façon classique, la trame 10 est divisée en un nombre déterminé (N_{IT} = 9 dans l'exemple présenté) d'intervalles de temps IT0 à IT8.

La figure 1 présente également une fenêtre d'écoute 11 de la porteuse BCCH par une station mobile, cette porteuse BCCH constituant pour cette station mobile une porteuse BCCH de cellule voisine. Dans un souci de simplification, on parle dans la suite de la description de "la station mobile" pour désigner une telle station mobile.

D'une façon générale, la station mobile dispose d'au moins une fenêtre d'écoute dans chacune d'au moins N_{T} trame(s) successive(s).

Dans l'exemple présenté sur la figure 1, la station mobile ne dispose d'une fenêtre d'écoute 11 de la porteuse BCCH que dans une trame (successive) (on a donc N_{T} = 1). En d'autres termes, la station mobile ne dispose pas de fenêtre d'écoute dans les trames précédente et suivante.

La fenêtre d'écoute 11 permet à la station mobile de recevoir N_{E} intervalles de temps de la porteuse BCCH, entre émission et réception du ou des canaux de trafic TCH. Sur la figure 1, on a N_{E} = 3.

En fait, la fenêtre d'écoute 11 est composée de N_{E} + 1 intervalles de temps. Mais du fait que la station de base courante (de la station mobile) et la station de base voisine (émettant la porteuse BCCH discutée) ne sont pas synchronisées, elles peuvent être décalées l'une par rapport à l'autre d'un demi-intervalle de temps au maximum. Par conséquent, il n'est possible d'assurer la présence dans cette fenêtre d'écoute 11 que de N_{E} intervalles de temps de la porteuse BCCH.

Comme présenté sur la figure 1, dans le premier mode de réalisation particulier d'une porteuse BCCH selon l'invention, parmi les 9 (= N_{IT} x N_{T} = 9 x 1) intervalles de temps de chaque trame de la porteuse BCCH, un certain nombre (N_{R} = 3) d'intervalles de temps IT0, IT3, IT6, dits intervalles de temps BCCH, sont émis avec une puissance constante. On rappelle que la récurrence de chaque intervalle de temps BCCH constitue un canal physique BCCH.

D'une façon générale, chaque intervalle de temps BCCH doit contenir l'information BCCH au moins une fois sur N_{T} trame(s) succesive(s). Or dans ce premier mode de réalisation, N_{T} = 1. Par conséquent, chaque intervalle de temps BCCH contient l'information BCCH (notée "I" sur la figure), ce qui signifie que chaque canal physique BCCH ne porte que le canal logique BCCH (pas de multiplexage du canal logique BCCH avec d'autres canaux logiques).

Le nombre et l'espacement de ces N_{R} intervalles de temps BCCH sont tels qu'au moins l'un d'entre eux est entièrement reçu dans l'unique fenêtre d'écoute successive 11. Ainsi, dans cet exemple, le quatrième intervalle de temps BCCH, référencé IT3, est entièrement reçu dans la fenêtre d'écoute 11.

Les intervalles de temps IT1, IT2, IT4, IT5, IT7, IT8 autres que ces N_{R} intervalles de temps BCCH (IT0, IT3, IT6) sont quant à eux émis avec une puissance pouvant être contrôlée. Ces autres intervalles de temps supportent notamment des canaux logiques de trafic TCH.

Le nombre N_{R} d'intervalles de temps BCCH est par exemple calculé en utilisant la relation suivante : N_{R} = INT [N_{IT} / N_{E}], où INT [X] est l'entier supérieur ou égal à X. Ainsi, dans l'exemple de la figure 1 : N_{R} = INT [9/3] = 3.

Par ailleurs, ces N_{R} intervalles de temps BCCH sont équirépartis sur les N_{IT} positions d'intervalle de temps possibles de la structure de trame 10 de la porteuse BCCH. Ainsi, dans l'exemple de la figure 1, les 3 intervalles de temps BCCH IT0, IT3, IT6 occupent les première, quatrième et septième positions d'intervalles de temps.

La figure 2 présente deux trames successives 20, 20' d'un second mode de réalisation particulier d'une porteuse BCCH selon l'invention. De même que précédemment, chaque trame 20, 20' est divisée en un nombre déterminé (N_{IT} = 9) d'intervalles de temps IT0 à IT8, IT0' à IT8'.

La figure 2 présente également deux fenêtres d'écoute successives 21, 21' de la porteuse BCCH par une station mobile. La station mobile dispose dans cet exemple d'une fenêtre d'écoute 21, 21' de la porteuse BCCH dans deux trames successives (on a donc N_{T} = 2). Chaque fenêtre d'écoute 21, 21' permet à la station mobile de recevoir N_{E} (= 3) intervalles de temps de la porteuse BCCH.

De même que dans le premier mode de réalisation, N_{R} = INT [N_{IT} / N_{E}] = 3. En d'autres termes, il y a trois intervalles de temps BCCH (IT0, IT3, IT6) dans chaque trame.

En revanche, dans ce second mode de réalisation, tous les intervalles de temps BCCH de chaque trame ne contiennent pas l'information BCCH (I). En effet, dans la première trame 20, seuls deux des trois intervalles de temps BCCH (les premier IT0 et quatrième IT3 intervalles de temps) contiennent l'information BCCH, et dans la seconde trame 20', seuls un des trois intervalles de temps BCCH (le septième IT6 intervalle de temps) contient l'information BCCH.

On comprend en effet qu'il suffit de s'assurer qu'au moins une des fenêtres 21, 21' reçoive entièrement l'information BCCH. Dans l'exemple de la figure 2, c'est la seconde fenêtre d'écoute 21' qui reçoit entièrement l'information BCCH contenue dans le septième intervalle de temps IT6 de la seconde trame 20'.

Afin d'optimiser l'utilisation des intervalles de temps BCCH, sur chacun des canaux physiques BCCH, on peut multiplexer avec le canal logique BCCH (qui porte l'information BCCH, notée I) un ou plusieurs autres canaux logiques (qui portent chacun une autre information, notée X). Ainsi, chaque intervalle de temps BCCH qui ne contient pas l'information BCCH n'est pas vide mais contient une autre information X.

Ce ou ces autres canaux logiques multiplexés avec le canal logique BCCH sont par exemple un canal TCH demi-débit et/ou un canal SDCCH et/ou d'un canal de synchronisation (SCH) et/ou d'un canal de correction des fréquences (FCH) et/ou d'un canal d'allocation des ressources (AGCH) et/ou d'un canal de messagerie (PCH).

La figure 3 présente trois trames successives 30, 30', 30" d'un troisième mode de réalisation particulier d'une porteuse BCCH selon l'invention. De même que précédemment, chaque trame 30, 30', 30" est divisée en un nombre déterminé (N_{IT} = 9) d'intervalles de temps IT0 à IT8, IT0' à IT8', IT0" à IT8".

La figure 3 présente également trois fenêtres d'écoute successives 31, 31', 31" de la porteuse BCCH par une station mobile. La station mobile dispose dans cet exemple d'une fenêtre d'écoute 31, 31', 31" de la porteuse BCCH dans trois trames successives (on a donc N_{T} = 3). Chaque fenêtre d'écoute 31, 31', 31" permet à la station mobile de recevoir N_{E} (= 3) intervalles de temps de la porteuse BCCH.

De même que dans le premier mode de réalisation, N_{R} = INT [N_{IT} / N_{E}] = 3. En d'autres termes, il y a trois intervalles de temps BCCH (IT0, IT3, IT6) dans chaque trame.

Comme dans le second mode de réalisation, tous les intervalles de temps BCCH de chaque trame ne contiennent pas l'information BCCH (I). En effet, dans chaque trame 30, 30', 30", seul un des trois intervalles de temps BCCH contient l'information BCCH. Dans ce troisième mode de réalisation, qui correspond au cas particulier où N_{R} = N_{T}, tout se passe comme si le canal logique BCCH sautait, d'une trame à l'autre, sur chacun des canaux physiques BCCH (c'est-à-dire sur chacun des intervalles de temps BCCH).

Dans l'exemple de la figure 3, c'est la seconde fenêtre d'écoute 31' qui reçoit entièrement l'information BCCH contenue dans le quatrième intervalle de temps IT3 de la seconde trame 30'.

Selon une variante de l'invention, un ou plusieurs intervalles de temps BCCH (par exemple le premier intervalle de temps IT0 de chaque trame), contiennent toujours l'information BCCH, quelle que soit la trame. Les autres intervalles de temps BCCH contiennent, selon la trame, soit l'information BCCH soit l'information X d'un autre canal logique.

Dans ce cas, l'information BCCH apparaît à un certain rythme sur un intervalle de temps BCCH fixe (par exemple IT0) et de plus glisse en apparence sur les autres intervalles de temps BCCH. La "partie fixe" sert par exemple aux stations mobiles à se synchroniser, et la "partie glissante" sert aux stations mobiles qui veulent préparer le handover et qui ne s'intéressent qu'à la mesure du niveau de puissance.

En généralisant cette variante, on peut également prévoir, dans la "partie fixe", de multiplexer le canal logique BCCH avec un autre canal logique. On notera que cette solution convient parfaitement au canal logique de synchronisation SCH dont la détection équivaut dans le GSM à la connaissance de l'emplacement du premier intervalle de temps. On comprend donc qu'il est préférable de placer le canal logique SCH dans la "partie fixe", puisque dans le cas contraire (c'est-à-dire s'il est placé dans la "partie glissante"), il convient de prévoir une information supplémentaire, à savoir le numéro de l'intervalle de temps.

L'invention concerne également un procédé de mesure du niveau de signal reçu sur une porteuse BCCH telle que présentée ci-dessus.

Comme présenté sur l'organigramme simplifié de la figure 4, dans un mode de réalisation particulier, ce procédé selon l'invention comprend les étapes suivantes :
- division (41) de chaque fenêtre d'écoute successive 11, 21, 21', 31, 31', 31" en . une pluralité de portions de temps 50, de façon que, lors de la réception de la porteuse BCCH, au moins une des portions de temps 50 contienne exclusivement une partie de l'un des N_{R} intervalles de temps BCCH ;
- mesure (42) du niveau de signal reçu sur chacune des portions de temps 50 de chacune des N_{F} fenêtres d'écoute successives ;
- comparaison (43) des niveaux de signal reçu mesurés, de façon à détecter le niveau de signal reçu maximal, ce niveau de signal reçu maximal est considéré comme constituant une mesure directe du niveau de signal reçu sur la porteuse BCCH.

Sur chacune des figures 1 à 3, on a représenté en hachuré la portion de temps 51 sur laquelle le niveau de signal reçu mesuré est maximal.

Lors de l'étape 41 de division, on limite la durée de chacune des portions de temps 50 à la moitié de la durée d'un des intervalles de temps d'une des trames de la porteuse BCCH.

## Revendications

1. Porteuse BCCH émise par une station de base d'un système de radiocommunication numérique cellulaire, à destination d'une pluralité de stations mobiles,
ladite porteuse BCCH étant segmentée de manière temporelle en trames successives de durée fixe, chacune desdites trames étant elle-même divisée en un nombre déterminé N_{IT} d'intervalles de temps (IT0 à IT8), ladite porteuse BCCH supportant notamment un canal physique BCCH portant lui-même au moins un canal logique BCCH, ledit canal logique BCCH transmettant une information générale de signalisation (I), dite information BCCH,
chaque station mobile, pour laquelle la station de base émettant ladite porteuse BCCH est une station de base voisine, disposant d'au moins une fenêtre d'écoute (11 ; 21, 21' ; 31, 31', 31") dans chacune d'au moins N_{T} trame(s) successive(s), N_{T} ≥ 1, soit au moins N_{F} fenêtre(s) d'écoute successive(s) pour la réception notamment de ladite porteuse BCCH, chaque fenêtre d'écoute permettant à la station mobile concernée de recevoir au moins NE intervalle(s) de temps de ladite porteuse BCCH, N_{E} ≥ 1,
caractérisée en ce que la porteuse BCCH supporte au moins N_{R} canal(aux) physique(s) BCCH transmis à puissance constante et constitué(s) par la récurrence dans chaque trame de N_{R} intervalle(s) de temps (IT0, IT3, IT6), dit(s) intervalle(s) de temps BCCH,
en ce que ledit ou chacun desdits N_{R} canal(aux) physique(s) BCCH porte au moins ledit canal logique BCCH, ledit ou chacun desdits N_{R} intervalles de temps BCCH contenant ladite information BCCH (I) au moins une fois sur N_{T} trame(s) successive(s),
en ce que le nombre et l'espacement du ou desdits N_{R} intervalle(s) de temps BCCH sont tels que ladite information BCCH (I) est entièrement reçue dans ladite ou l'une desdites au moins N_{F} fenêtre(s) d'écoute successive(s) de chaque station mobile,
et en ce que les intervalles de temps (IT1, IT2, IT4, IT5, IT7, IT8) autres que les N_{R} intervalles de temps BCCH sont émis avec une puissance pouvant être contrôlée.

2. Porteuse BCCH selon la revendication 1, caractérisée en ce que :
N_{R} = INT [N_{IT} / N_{E}], où INT [X] est l'entier supérieur ou égal à X.

3. Porteuse BCCH selon l'une quelconque des revendications 1 et 2, caractérisée en ce que, lorsque N_{R} ≥ 2, lesdits N_{R} intervalles de temps BCCH (IT0, IT3, IT6) sont équirépartis au sein de la structure de trame.

4. Porteuse BCCH selon l'une quelconque des revendications 1 à 3, caractérisée en ce que, lorsque N_{T} ≥ 2, ledit ou au moins un desdits N_{R} canal(aux) physique(s) BCCH porte, outre ledit canal logique BCCH, au moins un autre canal logique multiplexé avec le canal logique BCCH sur le canal physique BCCH,
ledit au moins un autre canal logique transmettant une autre information (X) dans ledit ou chacun desdits N_{R} intervalles de temps BCCH qui ne contient pas ladite information BCCH (I).

5. Porteuse BCCH selon la revendication 4, caractérisée en ce que ledit au moins un autre canal logique multiplexé avec ledit canal logique BCCH sur le canal physique BCCH appartient au groupe comprenant :
- un canal de trafic (TCH) demi-débit ;
- un canal de contrôle dédié (SDCCH) ;
- un canal de synchronisation (SCH) ;
- un canal de correction des fréquences (FCH);
- un canal d'allocation des ressources (AGCH);
- un canal de messagerie (PCH).

6. Porteuse BCCH selon l'une quelconque des revendications 4 et 5, caractérisée en ce que, lorsque N_{T} ≥ 2 et N_{R} ≥ 2, au moins un desdits N_{R} intervalles de temps BCCH contient ladite information BCCH (I) sur chaque trame successive,
et en ce que le ou les autres desdits N_{R} intervalles de temps BCCH contien(nen)t soit ladite information BCCH (I) soit ladite autre information (X) selon les trames.

7. Procédé de mesure du niveau de signal reçu sur une porteuse BCCH selon l'une quelconque des revendications 1 à 6, par une station mobile pour laquelle la station de base émettant ladite porteuse BCCH est une station de base voisine,
ladite station mobile disposant d'au moins une fenêtre d'écoute (11; 21, 21' ; 31, 31', 31") dans chacune d'au moins N_{T} trame(s) successive(s), N_{T} ≥ 1, soit au moins N_{F} fenêtre(s) d'écoute successive(s) pour la réception notamment de ladite porteuse BCCH, chaque fenêtre d'écoute permettant à ladite station mobile de recevoir au moins N_{E} intervalle(s) de temps de ladite porteuse BCCH, N_{E} ≥ 1,
caractérisé en ce qu'il comprend les étapes suivantes :
- division (41) de ladite ou de chacune desdites N_{F} fenêtre(s) d'écoute successive(s) (11 ; 21, 21' ; 31, 31', 31") en une pluralité de portions de temps (50), de façon que, lors de la réception de ladite porteuse BCCH, au moins une (51) desdites portions de temps contienne exclusivement une partie dudit ou de l'un desdits N_{R} intervalle(s) de temps BCCH ;
- mesure (42) du niveau de signal reçu sur chacune desdites portions de temps (50) de ladite ou de chacune desdites N_{F} fenêtre(s) d'écoute successive(s) ;
- comparaison (43) des niveaux de signal reçu mesurés, de façon à détecter le niveau de signal reçu maximal qui est considéré comme constituant ledit niveau de signal reçu sur ladite porteuse BCCH.
